# EUROPÄISCHE PATENTSCHRIFT

(11) **EP 0 851 163 B1**
(45) Veröffentlichungstag und Bekanntmachung des Hinweises auf die Patenterteilung: **25.09.2002**
(21) Anmeldenummer: 97121223.8
(22) Anmeldetag: 03.12.1997
(51) Int. Cl.: F16K 31/04, G05D 3/20, F16K 31/53

(54) **Elektrischer Stellantrieb für ein Ventil oder dergleichen**
Electric drive for a valve or similar unit
Actionneur électrique pour une vanne ou un élément similaire

(30) Priorität: 17.12.1996 DE 19652583
(43) Veröffentlichungstag der Anmeldung: 01.07.1998
(73) Patentinhaber: Holter Regelarmaturen GmbH & Co. KG, D-33758 Schloss Holte-Stukenbrock (DE)
(72) Erfinder: Wangemann, Matthias, 33758 Schloss Holte (DE); Höcker, Frank, 33378 Rheda-Wiedenbrück (DE)
(74) Vertreter: Hanewinkel, Lorenz, Dipl.-Phys.

(56) Entgegenhaltungen:
- DE-A- 3 501 477
- DE-A- 19 519 638
- GB-A- 1 330 419
- US-A- 5 152 316
- PATENT ABSTRACTS OF JAPAN vol. 11, no. 344 (M-640), 11.November 1987 & JP 62 124375 A (MITSUBISHI HEAVY IND LTD), 5.Juni 1987,

## Beschreibung

Die Erfindung betrifft einen Stellantrieb für ein Ventil oder dergleichen mit einer axial verschieblich gelagerten Stellspindel, die mit einem Gewindespindelantrieb verbunden ist, der mit zwei koaxial gelagerten Zahnradgetrieben von einem elektrischen Stellmotor angetrieben ist, der mittels eines Stellungssignalgebers und eines vorgebbaren Sollwertsignales und vorgebbaren Grenzstellungen über hysteresebehaftete Vergleicher angesteuert ist, und wobei ggf. ein energiegeladener Notaus-Antrieb bei Ausfall einer Versorgungsspannung den Stellantrieb in eine Endstellung verbringt.

Ein derartiger Stellantrieb ist aus der DE 37 08 470 C1 bekannt. Hierbei sind die beiden koaxialen Getriebe parallel geschaltet und über zwischengeschaltete Zahnräder einerseits von dem achsparallel angeordneten Stellmotor und andererseits von dem als Spiral-Federantrieb, der über Steuermittel bei jedem Einschalten voll aufgezogen wird, ausgebildeten Notaus-Antrieb angesteuert. Der Ist-Stellungssignalgeber besteht aus einem Potentiometer, und die Grenzwertgeber sind von über Federpakete aktivierte Nocken-Kontaktgeber gebildet. Der gesamte Aufbau besteht somit aus vielen verschiedenen, einer Abnutzung unterliegenden, Teilen und bedarf einer aufwendigen Justage.

Weiterhin ist aus der DE 37 08 414 A1 eine Stellantriebsteuerung bekannt, bei der über Potentiometer Grenzstellwerte einstellbar sind, zwischen denen normiert ein Potentiometer als Stellsignalgeber betrieben wird, dessen Ist-Stellsignal und Soll-Stellsignal einem hysteresebehafteten Vergleicher zur Ansteuerung des Stellmotors zugeführt sind.

Weiterhin ist aus der DE 40 31 908 C2 ein Stellantrieb bekannt, der mit einem hydraulischen Zylinder durch eine Pumpe angetrieben ist und als Notaus-Antrieb eine Druckfeder im Zylinder enthält, wobei jeweils bei Stromausfall ein Freilaufventil geöffnet wird. Auch hierbei werden die Ist-Stellung mit einem Potentiometer und die Grenzstellungen durch Nockensschalter gemeldet.

Es ist Aufgabe der Erfindung, einen wesentlichen einfacher aufgebauten Stellantrieb zu offenbaren, dessen Steuerfunktionen ohne Verschleißteile verwirklicht sind.

Die Lösung wir dadurch gegeben, daß die beiden Zahnradgetriebe hintereinandergekoppelte gleiche Planetengetriebe sind und unmittelbar von dem koaxial angeordneten Stellmotor angetrieben sind und an dessen Stellmotorwelle ein Magnet-Drehwinkelgeber als ein incrementaler Stellungssignalgeber angeordnet ist, dessen Stellungssignale einem Mikroprozessor zugeführt sind, der diese bezüglich einer jeweiligen Ist-Stellung auswertet und bezüglich der Grenzstellungen normiert mit dem Sollwertsignal hysteresebehaftet vergleicht und demgemäß den Stellmotor ansteuert.

Vorteilhafte Ausgestaltungen sind in den Unteransprüchen angegeben.

Der koaxiale Aufbau der Ansteuerelektronik des Antriebsmotors, der Planetengetriebe und des Spindelgetriebes ist in einem aus Kunststoff gespritzten Tragrahmen mit angespritztem Gehäuse vorgenommen.

Die axial geführte Spindelmutter, die Planetengetriebeteile, ausgenommenen die Lagerzapfen der abtriebseitigen Planetenräder und ein an der drehenden Spindel angeordnetes Handrad bestehen aus Kunststoff. Die innere Spindel besteht jedoch aus vergütetem Stahl. Hierdurch wird Gewicht gespart und das Trägheitsmoment im vergleich zu dem bekannten Metallgetriebeteilen niedrig gehalten. Die beiden Planetengetriebe bestehen aus gleichen Teilen, was die Fertigung vereinfacht. Eine Untersetzung von insgesamt 1:32 für die beiden Planetengetriebe hat sich als günstig erwiesen.

Die Kunststoffteile bestehen bevorzugt aus PBT (Polybutadienterephthalate) mit Glasfasereinlagerung; die Spindelmutter ist bevorzugt aus kohlefaserverstärktem Polyamid gespritzt, wobei ein 20% Kohlefaseranteil vorteilhaft ist.

Der Stellungssignalgeber arbeitet von einem Magneten gesteuert berührungslos und verschleißlos, insbes. mit Hallsensoren. Die incrementalen Drehwinkelimpulse werden in dem Mikroprozessor in bekannter Weise richtungsorientiert ausgewertet und in einem Zählerspeicher auf- bzw. abgezählt. Die Normierung des Zählbereiches auf den jeweiligen Stellbereich erfolgt nach jedem Einschalten durch ein Anfahr- und Eichprogramm, bei dem der Stellbereich voll durchlaufen wird und der anfangs auf Null normierte Zähler bis zum Zählerendstand bei der anderen Endstellung aufgezählt wird und dieser Zählerendstand als weiterer Normierungswert gespeichert wird, worauf die Stellung, bei der der demgemäß in Bezug auf das Sollwertsignal normierte Zählerwert auftritt, angesteuert wird. Weiterhin werden aus diesem Zählerendstand und dem Zähleranfangsstand Null durch Toleranzzugaben Grenzwerte für die anzusteuernden Endstellungen abgeleitet.

Die Ermittlung ob der Stelltrieb das angeschlossene Ventil in die jeweilige Endstellung verbracht hat, wird durch Überwachung einer Verlangsamung und eines Ausbleibens der Drehwinkelimpulse bei jeweils angesteuertem Motor ermittelt. Alternativ oder ergänzend wird das Erreichen einer der Endstellungen durch eine Ermittlung einer erhöhten Stromaufnahme des Stellmotors oder eines Absinkens der induzierten Gegenspannung an diesem festgestellt.

Mit den gleichen Methoden, die der Endstellungsermittlung dienen, wird vorteilhaft auch ständig eine Überwachung der Funktion des Stellantriebes und seiner Leicht- bzw. Schwergängigkeit durchgeführt. Im letzteren Fall steuert der Mikroprozessor den Stellmotor mit einem erhöhten Strom an, so daß eine sichere Einstellung auf den Sollwert erfolgt. Für den Wartungsdienst wird dabei ein Merker gesetzt, der einer optischen oder fernwirkenden Anzeige dient.

Die Erhöhung der Stellmotorbestromung im falle einer Schwergängigkeit wird durch eine Umschaltung auf eine erhöhte Ansteuerspannung und/oder durch eine längere Dauer der Schrittimpulse des bevorzugt verwendeten Schrittmotors vorgenommen. Die erhöhte Stromeinspeisung wird jeweils zeitlich derart begrenzt, daß keine unzulässige Übererwärmung der Motorwicklung auftritt.

Sofern das von dem Stellantrieb angetriebene Ventil Teil eines Regelkreises ist, ist es vorteilhaft, die Stellgeschwindigkeit vorzugeben, indem die Antriebsfrequenz des Schrittmotors geeignet vorgegeben wird, wodurch unerwünschte Regelschwingungen vermieden werden können und eine möglichst schnelle Anpassung des Stelltriebes an eine geänderte Sollwertvorgabe festzulegen ist. Abhängig von der vorgegebenen Schrittfrequenz wird zweckmäßig auch die Schrittimpulslänge und/oder die Versorgungsspannung des Schrittmotors vorgegeben.

Die Schrittweite des jeweiligen Drehwinkels ist vorzugsweise wesentlich geringer als der Hysteresebereich des magnetischen Stellungssignalgebers, der mit nur einem Magneten am Umfang eines Scheibe am Stellmototor und nur einer Hallsonde auf der dieser gegenüberliegenden Elektronikbaugruppe ausgestattet ist.

Vorteilhaft ist bei einer Nutzung bei verschieden genormten Soll-Stellwertvorgaben die Elektronik einheitlich ausgebildet und durch diverse Eingangsschaltungen ansteuerbar. Ebenso sind unterschiedliche Ausgänge für verschieden normierte Ist-Stellwertausgänge und Betriebssowie Alarmmeldungen vorgesehen. Auf diese Weise sind ein genormter Kommunikationsbus, eine 3-Punkt-Reglersteuerung, eine Analogsignal-Ansteuerung mit einem Spannungs- oder Stromsignal und eine Not-Auf-Zu-Schaltung mit geringem Schaltungsaufwand vorgesehen. Als Ausgänge sind über Pegelwandler- und Optokopplerschaltungen Ausgänge für Signale mit 24V sowie 230V Gleich- oder Wechselspannungspegel vorgesehen. Auch Schaltrelaisausgänge sind vorgesehen. Die Vorgabe der externen Signalpegel erfolgt vom Mikroprozessor mittels einer Puls-Längemodulation eines entsprechenden Ausgangssignals, das in bekannter Weise durch eine Rampen- und Pegelhalteschaltung in ein analoges Pegelsignal gewandelt wird.

Analoge Eingabesignale werden entweder von einem Analog-Digitalwandler-Eingang, der mit dem Mikroprozessor integriert ist ausgewertet oder durch externe Rampen- und Vergleicherschaltungen in Pulsdauersignale gewandelt, deren Dauer jeweils durch eine Zeitsignalzählung im Mikroprozessor ermittelt wird.

Analoge Eingabesignale werden entweder von einem Analog-Digitalwandler-Eingang, der in dem Mikroprozessor integriert ist, ausgewertet oder wie vor beschrieben durch externe Rampen- und Vergleicherschaltungen in Pulsdauersignale gewandelt, deren Dauer jeweils durch eine Zeitsignalzählung im Mikroprozessor ermittelt wird.

Die verschiedenen Eingangssignalwandler oder Ausgangssignalwandler sind steckbar angeordenet oder in einer geeigneten Auswahl fest auf der Schaltplatine angeordnet und durch Umschalter oder Steckzusätze bedarfsweise zu modifizieren oder zu ergänzen.

Relativ einfach ist die Ausbildung eines elektrischen Not-Endstellungsantriebes, der bei Ausfall der Versorgungsspannung oder auf ein externes Signal hin agiert, wobei die Stellenergie aus einem Akkumulator geliefert wird, der stets bezüglich einer ausreichenden Ladung und Leistungsfähigkeit vom Mikroprozessor angesteuert und überprüft wird. Bei mangelhaftem Akkumulator wird eine Alarmmeldung lokal und fernwirkend ausgegeben. Hierzu wird der Akkumulator periodisch voll aufgeladen bis der gewünschte Endladestand durch die entsprechend hohe Ladespannung nachgewiesen ist, und anschließend eine Teilentladung vorgenommen, wobei der Abfall der Akkumulatorspannung in einem bestimmten Zeitraum überwacht wird. Die Entladung wird abgebrochen, wenn noch reichlich Energie gespeichert ist, um den Stellantrieb über den ganzen Stellbereich auch bei Schwergängigkeit durchzusteuern.

Besonders vorteilhaft ist es, wenn neben dem Mikroprozessor eine zweite unabhängige Steuerschaltung, ggf. ein zweiter Mikroprozessor, eingesetzt ist, die z.B. die Betriebssteuerung des Akkumulators vornimmt und die außerdem wechselseitig mit dem anderen Mikroprozessor periodisch wechselnde Funktionsüberwachungssignale austauscht. Stellt eine der beiden Schaltungen ein Ausbleiben des Funktionsüberwachungssignals der anderen Prozessorschaltung fest, wird eine Alarmmeldung ausgegeben und/oder ein geeignetes Sicherheits-Stellprogramm in dem noch funktionsfähigen Schaltungsteil aktiviert.

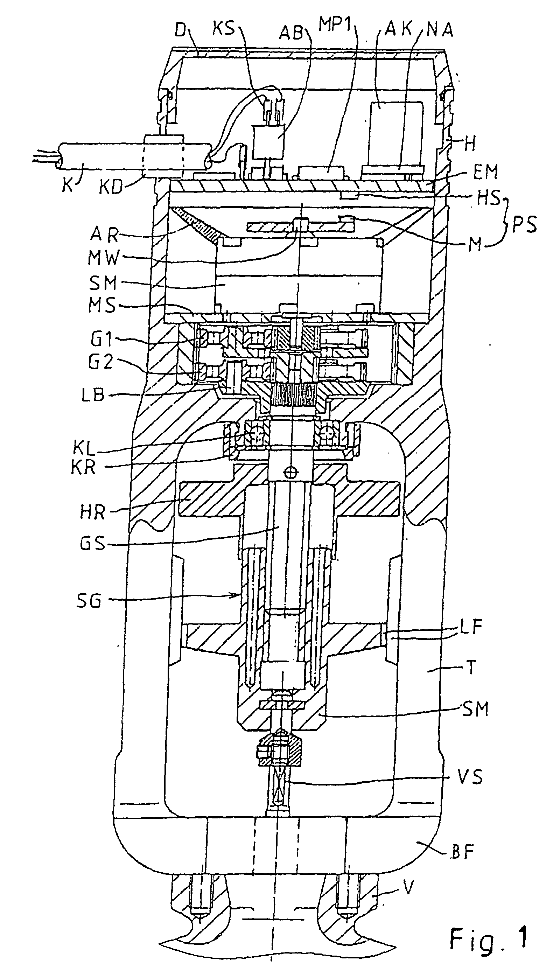

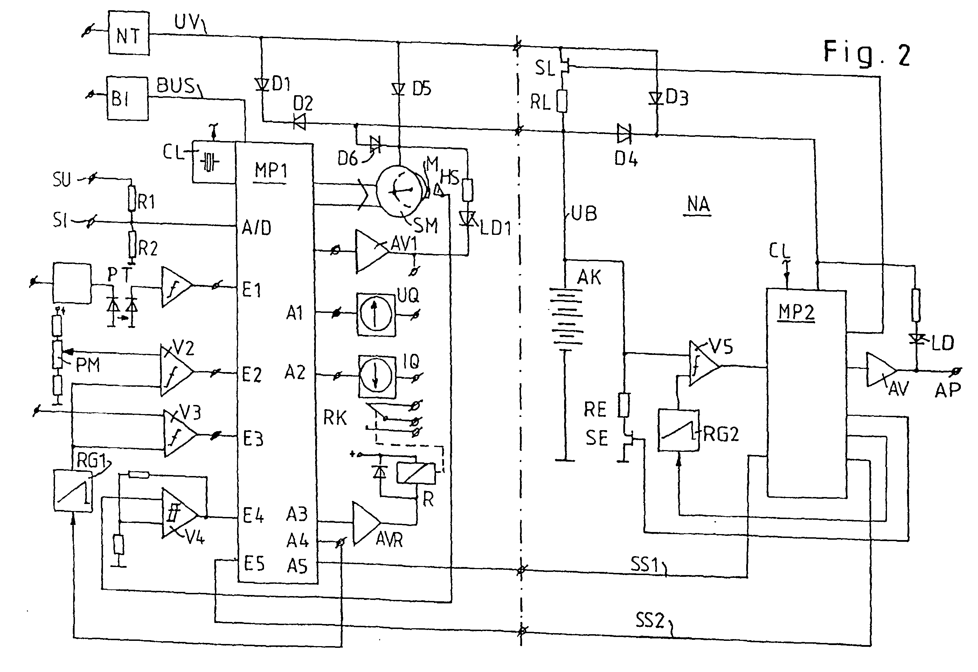

Vorteilhafte Ausgestaltungen sind in den Figuren 1 und 2 dargestellt.
- Fig. 1: zeigt einen Teilschnitt axial durch die Stellvorrichtung;
- Fig. 2: zeigt ein Blockschaltbild der Steuervorrichtung.

Figur 1 zeigt die Stellvorrichtung, die mit ihrem Befestigungsflansch BF auf einem Ventilansatz V montiert ist. Die Ventilspindel VS ist mit der Spindelmutter SM fest verbunden. Diese ist seitlich an Linearführungen des Tragrahmens T achsparallel geführt. In die Spindelmutter SM, die aus kohlenstoffaserverstärktem Kunststoff besteht, greift die stählerne, gehärtete Gewindespindel GS, wodurch der Gewindespindelantrieb SG leichtgängig und zuverlässig ausgebildet ist. Auf der drehbaren Spindel ist ein Handrad HR befestigt, mit dem im stromfreien Zustand eine Einstellung vorgenommen werden kann.

Die Gewindespindel GS ist in einem Kugellager KL gelagert, das in dem Tragrahmen T eingepaßt mit einem Kunststoffschnappring KR gehalten ist. Endseitig ist die Gewindespindel GS mit dem Getriebe G2, G1 verbunden, das aus zwei gleichen, hintereinandergeschalteten Planetengetrieben besteht, die aus Kunststoffteilen zusammengesetzt sind. Lediglich die am höchsten belasteten Lagerbolzen LB der abtriebseitigen Planetenräder bestehen aus Stahl.

Antriebseitig ist das erste Planetengetriebe G1 mit der Achse des Stellmotors SM verbunden, so daß das Spindelgetriebe SG, die Planetengetriebe G1, G2 und der Stellmotor SM koaxial montiert sind, wodurch die ganze Baueinheit äußerst schlank ausgebildet ist. Der Stellmotor SM und die Planetengetriebe G1, G2 sind in Ausnehmungen des Gehäuses H, das sich einstückig an den Tragrahmen T anschließt, mit einem Abstandsring AR, einer Montagescheibe MS eingesetzt und gehalten.

Anschließend an den Stellmotor SM ist mindestens eine Elektronikmontageplatte EM in das Gehäuse H eingesetzt, aus dem ein Steuer-und Versorgungskabel K durch eine Kabeldichtung KD herausgeführt ist. Endseitig ist das Gehäuse H mit einem Deckel D, im Preßsitz dicht verschlossen. Auf einer Scheibe ist am freien Ende der Motorwelle MW ein Magnet M und gegenüberliegend auf der Elektronikplatte EM eine Hallsonde HS montiert, die zusammen einen Stellungssignalgeber PS bilden.

Die Elektronikmontageplatte EM ist mit mindestens einem Mikroprozessor MP1 und ggf. mit Anpassungsbaugruppen AB bestückt, die die in unterschiedlichen Installationssystemen verschieden genormten Steuer- und Meldesignale normieren, potentialmäßig trennen oder in geeigneter Weise umgesetzt mit dem Mikroprozessor MP1 zu- oder abgehend verbinden.

Die Kabelenden sind vorzugsweise lösbar, z.B. mit Kabelsteckschuhen KS, mit der Schaltung verbunden, so daß ein leichtes Austauschen der Elektronikplatten EM und der vorzugsweise steckbar angeordneten Anpassungsbaugruppen AB möglich ist, wenn eine Neuausrüstung oder Systemumstellung vorgenommen werden soll. Weiterhin ist eine Notantriebsbaugruppe NA mit einer Akkumulatorbatterie AK auf der Elektronikplatte EM steckbar angeordnet.

Figur 2 zeigt ein Blockschaltbild der Gesamtschaltung einschließlich der Notantriebsbaugruppe NA, die einen Überwachungsmikroprozessor MP2 und die Akkumulatorbatterie AK umfaßt.

Der Steuermikroprozessor MP1 wird einerseits von einem Netzteil NT mit einer stabilisierten Versorgungsspannung UV über eine Entkopplungsdiode D1 und andererseits von dem Akkumulator AK mit der Akkumulatorspannung UB über eine zweite Entkopplungsdiode D2 gespeist, so daß auch ein Notbetrieb gesichert ist, wenn das Netzteil oder der Akkumulator einen Kurzschluß aufweisen.

Ebenso sind der Stellmotor SM und der zweite Mikroprozessor MP2 über entsprechende Diodenpaare D3, D4; D5, D6 zweiseitig gesichert gespeist.

Der Akkumulator AK wird von der Versorgungsspannung UV periodisch über einen Ladewiderstand RL und einen Ladeschalter SL aufgeladen und zwischendurch periodisch über einen Entladewiderstand RE und einen Entladeschalter SE entladen. Die beiden Schalter SL, SE werden durch den zweiten Prozessor MP2 gesteuert, der dabei die Batteriespannung UB laufend überwacht. Hierzu wird diese mit einer Vergleichersschaltung VS überprüft, deren Ausgang an einen digitalen Eingang geführt ist.

Vorzugsweise wird eine Messung der Batteriespannung UB vom Prozessor MP2 vorgenommen, wozu dem Vergleicher VS ein Rampensignal eines, z.B. als Integrator ausgebildeten, Rampengenerators RG2 am zweiten Eingang zugeführt wird, wobei der Rampengenerator von einem Ausgang des Prozessors MP2 angesteuert ist. Die Dauer der Zeit bis das Rampenniveau dem Niveau am anderen Vergleichereingang entspricht, wird durch eine Taktzählung im Prozessor ermittelt, so daß der Zählerstand ein Maß für die anliegende Spannung ist. Anhand vorgegebener Spannungswerte und aufgrund von Zeitvorgaben wird die Ladung und Entladung gesteuert und bei Nachlassen der Akkumulatorkapazität oder Ansteigen dessen Innenwiderstandes oder völligem Defekt des Akkumulators, welche durch ein Überschreiten der zum Laden oder Entladen benötigten Zeiten erkannt werden, wird ein Alarmsignal über einen Verstärker AV auf eine Leuchtdiode LD und ggf. einem Fernwirkleitungsanschluß AP ausgegeben.

Der Steuermikroprozessor MP1 ist von einem quarzgesteuerten Taktgenerator CL gesteuert, dessen Takt auch dem zweiten Prozessor MP2 zugeführt ist. Der Takt wird insbes. in Zeitzählprogrammen ausgewertet, die sowohl zur Analog-Digitalumsetzung von Eingangssignalen als auch zur Puls-Längenmodulation von Ausgangssignalen als zur Bildung von Überwachungszeiträumen der Impulse des Stellungssignalgebers PS, um einen Endanschlag oder einen Schwerlauf oder ein Festsitzen zu erkennen, und zur Bestimmung der Frequenz und Dauer der Antriebsimpulse des Stellmotors SM genutzt.

Außerdem werden zustandswechselnde Überwachungssignale SS1, SS2 zwischen den beiden Prozessoren MP1, MP2, in bestimmten Programmpunkten in bestimmten Zeitabständen ausgetauscht, deren zeitgerechtes Auftreten jeweils gegenseitig überwacht wird und deren Fehlen jeweils zur Ausgabe eines Alarmsignales auf einem Meldeausgang AP mit jeweils einer an einem Ausgangsverstärker AV1, AV angeschlossenen Leuchtdiode LD1, LD führt.

Der Steuerprozessor MP1 hat einen Eingang A/D für das analoge Soll-Steuersignal SS, das intern in ein Digitalsteuersignal umgewandelt wird. Diesem Eingang sind Widerstände R1, R2 als Teiler oder Umsetzer vorgeschaltet, durch die die auf einen Spannungsbereich von 0-10 V bzw. auf einen Strombereich von 0-20 mA genormte Soll-Eingangssignale SU, SI auf einen passenden Pegelbereich zu normieren sind.

Ansonsten sind weitere Digitalsignaleingänge E1-E5 vorgeschen, von denen einer das Stellungssignal des Hallsensors HS, der von einem Magneten M geschaltet wird, nach einer hysterebehafteten Verstärkung im Verstärker V4 empfängt.

Die weiteren Eingänge E1-E3 sind je nach Bedarf mit unterschiedlichen Eingangsschaltungen versehen, die beispielhaft dargestellt sind. So ist am ersten der Eingänge E1 eine Potentialtrennschaltung PT angeschlossen gezeigt, die das ankommende Signal über einen Optokoppler überträgt, von der es verstärkt dem ersten Eingang E1 zugeführt wird. Hierüber kann beispielsweise eine zwangsweise Notabschaltung signalisiert werden.

Am zweiten und dritten Eingang E2, E3 ist jeweils ein Pegelvergleicher V2, V3 angeschlossen, dessen einer Eingang von einem Rampengenerator RG1 beaufschlagt ist, der von einem Prozessorausgang A4 angesteuert ist. Dem zweiten Eingang der Pegelvergleicher V2, V3 ist jeweils ein auf sein Niveau zu prüfendes Signal zugeführt, das intern oder extern bereitgestellt sein kann. Beispielsweise ist die gewünschte Stellgeschwindigkeit mit dem Potentiometer PM als Potential vorzugeben und durch die Abfrage mit dem Rampensignalvergleicher am Eingang E2 zeitlich umgesetzt eingegeben und im Prozessor durch Zählung von Taktgebertakten digitalisiert aufgenommen.

Ebenso sind die Ausgänge A2-A4 des Prozessors PM1 mit jeweils den Anforderungen entsprechenden Ausgangsschaltungen zu beschalten, die beispielhaft dargestellt sind. So sind am Ausgang A1 eine schaltende Spannungsquelle UQ, am Ausgang A2 eine schaltende Stromquelle IQ und am Ausgang A3 ein Verstärker AVR, der ein Schaltrelais R treibt, dessen Relaiskontakte RK einen potentialfreie Ausgänge sind, angeschlossen. Ebenso können auch elektrooptisch trennende Optokoppler-Ausgabeschaltungen oder einfache Verstärker eingesetzt werden.

Die Eingänge E1-E3 und die Ausgänge A1-A4 sind auf Steckeranschlüsse geführt und mit Ein- oder Ausgabebaugrupen, z.B. wie gezeigt, nach Bedarf bestückt.

Ein geeignetes Programm wird dem Prozessor PM1 in seinen Speicher eingeschrieben und bedarfsweise über einen BUS-Anschluß modifiziert. Auch Betriebsdaten lassen sich über ein Businterface BI durch den Bus in den Prozessor PC1 laden und abfragen, wenn dies extern vorgesehen ist.

Die universelle Ausbildung des Steuerprozessors MP1 in Verbindung mit der Modularität der Peripherieausstattung und der Ergänzbarkeit der Notantriebs- und Überwachungsbaugruppe NA ergibt eine den gängigen Verhältnissen leicht anpassbares, zuverlässige und sichere, wartungsarme Steuersystemkomponente.

## Patentansprüche

1. Stellantrieb für ein Ventil oder dergleichen mit einer axial verschieblich gelagerten Stellspindel (VS), die mit einem Gewindespindelantrieb (SG) verbunden ist, der mit zwei koaxial gelagerten Zahnradgetrieben (G1, G2) von einem elektrischen Stellmotor (SM) angetrieben ist, der mittels eines Stellungssignalgebers (PS) und eines vorgebbaren Sollwertsignales (SS) und vorgebbaren Grenzstellungen über hysteresebehaftete Vergleicher angesteuert ist, und wobei ggf. ein energiegeladener Notaus-Antrieb (NA) bei Ausfall einer Versorgungsspannung (UV) den Stellantrieb in eine der Endstellungen verbringt, **dadurch gekennzeichnet, daß** die beiden Zahnradgetriebe (G1, G2) hintereinandergekoppelte gleiche Planetengetriebe sind und unmittelbar von dem koaxial angeordneten Stellmotor (SM) angetrieben sind und an dessen Stellmotorwelle (MW) ein Magnet-Drehwinkelgeber (M/HS) als ein incrementaler Stellungssignalgeber (PS) angeordnet ist, dessen Stellungssignale einem Mikroprozessor (MP1) zugeführt sind, der diese bezüglich einer jeweiligen Ist-Stellung auswertet und bezüglich der Grenzstellungen normiert mit dem Sollwertsignal (SS) hysteresebehaftet vergleicht und demgemäß den Stellmotor (SM) ansteuert.

2. Stellantrieb nach Anspruch 1, **dadurch gekennzeichnet, daß** der Mikroprozessor (MP1) eine Taktgeberschaltung (CL) umfaßt, deren Taktsignale programmgesteuert zur Bestimmung der Dauer und Folgezeit von Ausgangssignalen zur Ansteuerung des Stellmotors (SM) oder eines längenmodulierten Ausgangssignales und/oder zur Bestimmung der Dauer und/oder Zeitlage eines Eingangssignales, des Signales des Drehwinkelgebers (HS), des Signales eines rampenangesteuerten Vergleichers (V2, V3) und/oder eines Sicherheitssignales (SS2) genutzt werden.

3. Stellantrieb nach Anspruch 2, **dadurch gekennzeichnet, daß** jeweils nach einem Einschalten oder aufgrund eines Prüfeingangssignals oder periodisch in bestimmten Zeitabständen programmgesteuert der Stellantrieb jeweils bis in seine beiden Endstellungen gesteuert wird, wobei jeweils das Erreichen dieser durch das Ausbleiben der Signale des Drehwinkelgebers (HS) ermittelt wird und diesen Endstellungen zugeordnet ein Zähler der dabei ausgeführten Positionierschritte des Stellmotors (SM) auf Null gesetzt wird bzw. sein Inhalt als der Grenzwert abgespeichert wird.

4. Stellantrieb nach Anspruch 2 oder 3, **dadurch gekennzeichnet, daß** bei der Ansteuerung des Stellmotors (SM) die Signale des Drehwinkelgebers (HS) bezüglich deren Folgezeiten überwacht werden und abhängig von diesen eine Veränderung der Dauer und Folgezeit der Motoransteuerimpulse vorgenommen wird.

5. Stellantrieb nach Anspruch 4, **dadurch gekennzeichnet, daß** während der Ansteuerung des Stellmotors (SM), wenn die Signale des Drehwinkelgebers (HS) eine vorgegebene Dauer überschreiten und noch keine Endstellung erreicht ist, während einer vorgegebenen maximalen Zeit mit Motoransteuerimpulsen größter zulässiger Dauer und/oder Leistung in eine vorgegebene Sicherheitsstellung gesteuert wird und eine Fehlermeldung signalisiert wird.

6. Stellantrieb nach einem der Ansprüche 3 bis 5, **dadurch gekennzeichnet, daß** die Folgezeit von den Ausgangssignalen zur Ansteuerung des Stellmotors (SM) beim Ansteuern der Endstellungen jeweils minimal vorgegeben ist und jeweils eine Ansteuerung bis zum Auftreten des Sollwertsignals (SS) einem Eingangssignal des Mikroprozessors (MP1) gemäß gesteuert ist.

7. Stellantrieb nach einem der vorstehenden Ansprüche, **dadurch gekennzeichnet, daß** dem Mikroprozessor (MP1) das Sollwertsignal (SS) gemäß einer Spannungs- oder Stromspeisungsnorm über einen Analog/Digitalwandlereingang (A/D) zugeführt ist.

8. Stellantrieb nach einem der vorstehenden Ansprüche, **dadurch gekennzeichnet, daß** der Mikroprozessor (MP1) digitale Schaltsignaleingänge (E1 - E5) aufweist, die mit mindestens einer Vergleicherschaltung (V2, V3, V4) oder einer optogekoppelten Potentialtrennschaltung (PT) beschaltet sind.

9. Stellantrieb nach Anspruch 8, **dadurch gekennzeichnet, daß** mindestens eine der Vergleicherschaltungen an einem Eingang mit einem Potentiometer (PM) zur Potentialvorgabe und am anderen Eingang mit einer Rampenspannung beschaltet ist.

10. Stellantrieb nach einem der vorstehenden Ansprüche, **dadurch gekennzeichnet, daß** der Mikroprozessor (MP1) ausgangsseitig mit mindestens einem Verstärker (AV1), einer geschalteten Spannungsquelle (UQ), einer geschalteten Stromquelle (IQ), einer optogekoppelten Ausgangsschaltung oder einer Relaisausgangsschaltung (AVR, R, RK) beschaltet ist.

11. Stellantrieb nach einem der vorstehenden Ansprüche, **dadurch gekennzeichnet, daß** die Ein- und Ausgänge (E1 - E5, A1 - A5) des Mikroprozessors (MP1) auf Steckverbinder geführt sind, die mit den Vergleicherschaltungen (V2 - V4), Verstärkern (AV1), schaltbaren Quellschaltungen (UQ, IQ) oder Ausgangsschaltungen (AVR) zu bestücken sind.

12. Stellantrieb nach einem der vorstehenden Ansprüche, **dadurch gekennzeichnet, daß** mit der Versorgungsspannung (UV) über eine Lade- und Entladesteuerschaltung (SL, RL; SE, RE; MP2) ein Akkumulator (AK) periodisch be- und teilentladen wird, so daß seine Ladung stets zu einer Notabschaltung des Steuerantriebes ausreicht, und eine diesbezügliche Funktionsfähigkeit des Akkumulators (AK) laufend überwacht und fehlendenfalls eine Alarmmeldung gegeben wird, und daß der Akkumulator (AK) über mindestens eine Trenndiode (D2, D4, D6) mit den Mikroprozessoren (MP1, MP2) und dem Antriebsmotor (SM) verbunden ist.

13. Stellantrieb nach einem der vorstehenden Ansprüche, **dadurch gekennzeichnet, daß** die Lade- und Entladesteuerung einen zweiten Mikroprozessor (MP2) oder eine Ablaufsteuerung enthält, die mit dem ersten Mikroprozessor (MP1) laufend Überwachungssignale (SS1, SS2) austauscht.

14. Stellantrieb nach einem der vorstehenden Ansprüche, **dadurch gekennzeichnet, daß** seine Bauteile in einem Kunststoff-Tragrahmen (T) mit einem ventilseitigen Befestigungsflansch (BF) und einem getriebeseitig daran angespritzen Gehäuse (H) angeordnet sind.

15. Stellantrieb nach Anspruch 14, **dadurch gekennzeichnet, daß** der Gewindspindelantrieb (SG) aus einer kohlefaserverstärkten linear am Tragrahmen (T) geführten Spindelmutter (SM) und einer vergüteten Stahl-Gewindespindel (GS) besteht.

16. Stellantrieb nach Anspruch 14 oder 15, **dadurch gekennzeichnet, daß** die Zahnradgetriebe (G1, G2) zwei gleiche Planetengetriebe sind, die aus Kunststoffzahnrädern und -kränzen bestehen.

17. Stellantrieb nach Anspruch 1, **dadurch gekennzeichnet, daß** der Stellungssignalgeber (PS) aus einer Hallsonde (HS) besteht, die auf einer Elektronikmontageplatte (EM) nahe dem Magneten (M) der am Stellmotor (SM) montiert ist, im Gehäuse (H) angeordnet ist, und daß auf der Elektronikmontageplatte (EM) der Mikroprozessor (MP1) und lösbare Schnittstellen-Anpassungsschaltungen (AB) und ggf. die Notantriebsschaltung (NA) mit einem Akkumulator (AK) angeordnet sind.

## Claims

1. Actuator for a valve or the like, having an actuating spindle (VS) which is mounted so as to be axially displaceable and is connected to a threaded spindle drive (SG) powered by two coaxially mounted toothed gearing units (G1, G2) of an electric actuating motor (SM) which is controlled by means of a position transducer (PS) and of a preselectable setpoint signal (SS) and preselectable threshold settings via comparators affected by hysteresis, and with, if appropriate, an energy-charged emergency OFF drive (NA) moving the actuator into one of the extreme positions in the event of a failure of the supply voltage (UV),
**characterised in that** the two toothed gearing units (G1, G2) are identical planetary gearing units coupled in series and powered directly by the coaxially arranged actuating motor (SM), and that arranged on the actuating motor's shaft (MW) is a magnetic angle-of-rotation transducer (M/HS) in the form of an incremental position transducer (PS) the position signals from which are sent to a microprocessor (MP1) which evaluates them in respect of a given actual position and in respect of the threshold positions compares them with the setpoint signal (SS) in a standardised manner that involves hysteresis, and controls the actuating motor (SM) accordingly.

2. Actuator according to claim 1, **characterised in that** the microprocessor (MP1) comprises a clock circuit (CL) the clock signals of which are utilised in a program-controlled manner to determine the duration and follow-up time of output signals for controlling the actuating motor (SM) or a length-modulated output signal and/or for determining the duration and/or temporal position of an input signal, of the signal from the angle-of-rotation transducer (HS), of the signal from a ramp-controlled comparator (V2, V3) and/or of a safety signal (SS2).

3. Actuator according to claim 2, **characterised in that** in each case after being switched on or on account of a test input signal or periodically at certain time intervals in a program-controlled manner, the actuator is in each case driven up to both of its extreme positions, the fact that these have been reached being in each case established by the absence of signals from the angle-of-rotation transducer (HS) and, operatively associated with these extreme positions, a counter for the positioning steps executed by the actuating motor (SM) being set to zero and its content stored as the threshold value.

4. Actuator according to claim 2 or 3, **characterised in that** as the actuating motor (SM) is being controlled, the signals from the angle-of-rotation transducer (HS) are monitored in reapect of their follow-up times and independently of the latter a modification of the duration and follow-up time of the motor controlling pulses is undertaken.

5. Actuator according to claim 4, **characterised in that** while the actuator motor (SM) is being controlled, if the signals from the angle-of-rotation transducer (HS) exceed a predetermined length and an extreme position has so far not been reached, for a predetermined maximum time motor controlling pulses of the maximum permissible duration and/or power are used to adopt a predetermined safety position and an error message is displayed.

6. Actuator according to any of claims 3 to 5, **characterised in that** the minimum follow-up time for the output signals to control the actuating motor (SM) when adopting the extreme positions is specified in each case and each respect control manoeuvre until the setpoing signal (SS) appears is governed by an input signal from the microprocessor (MP1).

7. Actuator according to any of the preceding claims, **characterised in that** the setpoint signal (SS) is sent to the microprocessor (MP1) in accordance with a voltage supply standard or current supply standard, via an analogue-to-digital converter input (A/D).

8. Actuator according to any of the preceding claims, **characterised in that** the microprocessor (MP1) has digital switching signal inputs (E1 - E5), which are wired to at least one comparator circuit (V2, V3, V4) or an optocoupled potential buffer circuit (PT).

9. Actuator according to claim 8, **characterised in that** at least one of the comparator circuits is wired at one input to a potentiometer (PM) to specify the potential and at the other input to a ramp voltage.

10. Actuator according to any of the preceding claims, **characterised in that** the microprocessor (MP1) is wired on the output side to at least one amplifier (AV1), a switched voltage source (UQ), a switched current source (IQ), an optocoupled output circuit or a relay output circuit (AVR, R, RK).

11. Actuator according to any of the preceding claims, **characterised in that** the inputs and outputs (E1 - E5, A1 - A5) of the microprocessor (MP1) lead to plug connectors which are to be equipped with the comparator circuits (V2 - V4), amplifiers (AV1), switchable source circuits (UQ, IQ) or output circuits (AVR).

12. Actuator according to any of the preceding claims, **characterised in that** a storage battery (AK) is periodically charged and partially discharged with the supply voltage (UV) via a charging and discharging master circuit (SL, RL; SE, RE: MP2), with the result that its charge is always sufficient to disconnect the master drive in an emergency, and the ability of the storage battery (AK) to function in this respect is monitored constantly and an alarm message is given if said ability is found to be lacking, and that the storage battery (AK) is connected via at least one isolating diode (D2, D4, D6) to the microprocessors (MP1, MP2) and to the driving motor (SM).

13. Actuator according to any of the preceding claims, **characterised in that** the charging and discharging control contains a second microprocessor (MP2) or a sequential control which constantly exchanges monitoring signals (SS1, SS2) with the first microprocessor (MP1).

14. Actuator according to any of the preceding claims, **characterised in that** its components are arranged in a plastics supporting frame (T) having a fixing flange (BF) on the valve side and a housing (H) injection moulded thereto on the gearing side.

15. Actuator according to claim 14, **characterised in that** the threaded spindle drive (SG) consists of a carbon-fibre-reinforced spindle nut (SM) set linearly on the supporting frame (T) and a hardened and tempered steel threaded spindle (GS).

16. Actuator according to claim 14 or claim 15, **characterised in that** the toothed gearing units (G1, G2) are two identical planetary gearing units consisting of plastics toothed gears and plastics ring gears.

17. Actuator according to claim 1, **characterised in that** the position transducer (PS) consists of a Hall probe (HS) which is arranged in the housing (H) on an electronics mounting plate (EM) close to the magnet (M) which is fixed on the actuating motor (SM), and that arranged on the electronics mounting plate (EM) are the microprocessor (MP1) and detachable interface adaptation circuits (AB) and, if appropriate, the emergency ON circuit (NA) with a storage battery (AK).

## Revendications

1. Actionneur électrique pour une vanne ou un élément similaire, ledit actionneur comprenant une broche de réglage (VS) déplaçable dans un plan axial et est reliée à un système d'entraînement (SG) qui est commandé, avec deux transmissions par engrenages (G1, G2), à montage coaxial, par un servomoteur (SM) excité à l'aide d'un transmetteur de signaux de positionnement (PS), d'un signal de valeur de consigne (SS) et de positionnements limites prédéfinissables, par l'intermédiaire d'un comparateur à hystérésis, un entraînement de secours (NA) amenant l'actionneur dans l'une des positions finales en cas de manque de tension d'alimentation (UV),
**caractérisé en ce que**
les deux transmissions par engrenage (G1, G2) sont des engrenages planétaires identiques, couplés l'un derrière l'autre, et entraînés directement par le servomoteur (SM) disposé dans un plan coaxial, un capteur d'angle de rotation magnétique (M/HS) étant installé, en tant que transmetteur de signaux de positionnement incrémental (PS), sur l'arbre (MW) dudit servomoteur (SM) et lesdits signaux de positionnement étant conduits à un microprocesseur (MP1), qui les exploite par rapport à une position réelle respective et les compare, compte tenu de l'hystérésis, avec le signal de consigne (SS), en ce qui concerne les positions limites, pour commander adéquatement le servomoteur (SM).

2. Actionneur selon la revendication 1,
**caractérisé en ce que**
le microprocesseur (MP1) comprend un circuit à générateur de rythme (CL) dont les signaux, commandés par programme, sont utilisés pour déterminer la durée et la succession des signaux de sortie dans le but d'exciter le servomoteur (SM) ou un signal de sortie modulé linéairement et / ou de déterminer la durée et / ou l'intervalle de temps d'un signal d'entrée, du signal du transmetteur d'angle de rotation (HS), du signal d'un comparateur commandé par le flanc de croissance d'une impulsion (V2, V3) et / ou d'un signal de sécurité (SS2).

3. Actionneur selon la revendication 2,
**caractérisé en ce que**,
l'actionneur est mené jusqu'à ses deux positions finales après chaque mise en circuit ou à la suite d'un signal d'entrée de contrôle ou périodiquement, à des intervalles déterminés, chaque arrivée à ces positions finales étant déterminée par l'absence de signaux de la part du capteur d'angle de rotation (HS) et coordonnée à ces positions finales, un compteur des pas de positionnement effectués par le servomoteur (SM) étant mis à zéro ou son contenu mémorisé en tant que valeur limite.

4. Actionneur selon la revendication 2 ou 3,
**caractérisé en ce que**,
lors de l'excitation du servomoteur (SM), les signaux du capteur d'angle de rotation (HS) sont contrôlés quant à leur succession au niveau du temps et qu'une modification de la durée et de la cadence des impulsions d'excitation du moteur est effectuée en fonction de ceux-ci.

5. Actionneur selon la revendication 4,
**caractérisé en ce que**,
pendant l'excitation du servomoteur (SM), lorsque les signaux du capteur d'angle de rotation (HS) dépassent une durée prédéfinie sans qu'une position finale soit atteinte, ledit servomoteur est amené dans une position de sécurité prédéfinie, par des impulsions d'excitation de moteur de durée et / ou de tension admissibles les plus élevées, et un message d'erreur est lancé.

6. Actionneur selon l'une des revendications 3 à 5,
**caractérisé en ce que**,
la cadence des signaux de sortie, servant à l'excitation du servomoteur (SM), lors d'une commande en direction des positions finales, est chaque fois prévue à une valeur minimale et un ordre est chaque fois donné conformément à un signal d'entrée du microprocesseur, jusqu'à l'intervention du signal de valeur de consigne (SS)).

7. Actionneur selon l'une des revendications précédentes,
**caractérisé en ce que**
le signal de valeur de consigne (SS) est conduit au microprocesseur (MP1), par l'intermédiaire d'une entrée de convertisseur analogique / numérique (A/D), conformément à une norme d'alimentation en tension ou en courant.

8. Actionneur selon l'une des revendications précédentes,
**caractérisé en ce que**
le microprocesseur (MP1) présente des entrées de signaux de commutation numériques (E1 à E5) qui sont interconnectées, au moins, avec un circuit comparateur (V2, V3, V4) ou un circuit sectionneur de potentiel optocouplé (PT).

9. Actionneur selon la revendication 8,
**caractérisé en ce que**
l'un des circuits comparateurs, au moins, est relié, à une entrée, à un potentiomètre (PM) en vue de fournir une référence de potentiel, et, à l'autre entrée, avec une tension croissante.

10. Actionneur selon l'une des revendications précédentes,
**caractérisé en ce que**
le microprocesseur (MP1), côté sortie, est reliée, au moins, à un amplificateur (AV1), une source de tension commutable (UQ), une source de courant commutable (IQ), un circuit de sortie optocouplé ou un circuit de sortie relais (AVR, R, RK).

11. Actionneur selon l'une des revendications précédentes,
**caractérisé en ce que**
les entrées et sorties (E1 à E5, A1 à A5) du microprocesseur (MP1) sont prévues sur connecteurs à fiches qui sont à pourvoir de circuits comparateurs (V2-V4), amplificateurs (AV1), circuits de sources de tension et courant commutables (UQ, IQ) ou circuits de sortie (AVR).

12. Actionneur selon l'une des revendications précédentes,
**caractérisé en ce que**
l'accumulateur (AK) est périodiquement chargé et partiellement déchargé par l'intermédiaire d'un circuit de commande de chargement et déchargement (SL, RL ; SE, RE ; MP2), en sorte que sa charge suffise toujours à assurer un arrêt d'urgence de la commande, le bon fonctionnement de l'accumulateur (AK) étant constamment contrôlé et un message étant lancé en cas de perturbation,
et que l'accumulateur (AK) est relié aux microprocesseurs (MP1, MP2) et au moteur de commande (SM) par l'intermédiaire d'au moins une diode de blocage (D2. D4, D6).

13. Actionneur selon l'une des revendications précédentes,
**caractérisé en ce que**
la commande de chargement et de déchargement comprend un deuxième microprocesseur (MP2) ou une commande séquentielle échangeant continuellement des signaux de contrôle (SS1, SS2) avec le premier microprocesseur (MP1)

14. Actionneur selon l'une des revendications précédentes,
**caractérisé en ce que**
ses éléments sont disposés dans un cadre support (T) présentant une bride de fixation (BF) du côté de la vanne et formant un boîtier (H), du côté de l'engrenage.

15. Actionneur selon la revendication 14,
**caractérisé en ce que**
l'entraînement à broche filetée (SG) est composé d'une mère-broche (SM), renforcée aux fibres de carbone et guidée linéairement sur le cadre support (T), et d'une broche filetée (GS) en acier trempé et revenu.

16. Actionneur selon la revendication 14 ou 15,
**caractérisé en ce que**
les engrenages à roues dentées (G1, G2) sont deux engrenages planétaires identiques, composés de roues dentées en matière plastique.

17. Actionneur selon la revendication 1,
**caractérisé en ce que**
le transmetteur de signaux de positionnement (PS) consiste en une sonde de Hall (HS) qui est installée sur une plaque de montage (EM), dans le boîtier (H), à proximité de l'aimant (M) qui est monté sur le servomoteur (SM) et
que le microprocesseur (MP1) et des circuits d'adaptation d'interfaces amovibles (AB) ainsi que, le cas échéant, un circuit de commande de secours (NA) sont disposés, avec un accumulateur (AK), sur la plaque de montage (EM).
